# EUROPEAN PATENT APPLICATION

(11) **EP 4 395 430 A1**
(43) Date of publication of application: **03.07.2024**
(21) Application number: 22217413.8
(22) Date of filing: 30.12.2022
(51) Int. Cl.: H04W 64/00

(54) **A METHOD AND A SYSTEM FOR IDENTIFYING AN INTERFERER IN A WIRELESS NETWORK**

(71) Applicant: Advanced Digital Broadcast S.A., 1293 Bellevue (CH)
(72) Inventor: MACUGOWSKI, Adam, 65-119 Zielona Gora (PL)
(74) Representative: Kancelaria Eupatent.pl Sp. z.o.o

(57) **Abstract**

A method for identifying an interferer in a wireless network, the method comprising: providing at least two scanners (101-103) configured to receive wireless network signal and to determine an angle of arrival of the signal; providing a controller (110) configured to communicate with the scanners (101-103), wherein the controller (110) comprises mapping data (112) indicating the location of the scanners (101-103) and a user interface (113); requesting (301) at least one of the scanners (101-103) to perform a scan of the wireless network channels to detect a channel that is highly utilized; requesting (302) at least two of the scanners (101-103) to detect the angle of arrival of the signal in the highly utilized channel to the particular scanner (101-103); determining (303) a location of a source of the signal in the highly utilized channel based on the mapping data (112) and at least two angles of arrival of the signal to particular scanners (101-103); and presenting (305) the location of the source of the signal via the user interface (113).

## Description

### TECHNICAL FIELD

The present invention relates to wireless networks, in particular to detecting an interferer in a wireless network.

### BACKGROUND

Wi-Fi networks have become more and more popular, with more and more devices operating in the vicinity of each other. This often causes collisions between attempts to use a particular wireless channel between these devices. The collisions deteriorate the overall effective channel throughput.

Currently, RLAN (Radio Local Area Network) regulatory force implements a Channel Access Mechanism (Adaptivity) to avoid collision in shared radio bands. In all the units on the market, it is implemented to meet the regulatory standard. Due to the random nature of channel occupancy of each device in range, and random point in time when the device is trying to access the medium, in the dense wireless environment, the channel utilization is not efficient due to a high number of transmission (TX) collisions and contention among the devices about channel access. Especially when two or more access point (AP) devices are in the TX range, cochannel interference occurs, leading to problems with reliable data transfer.

In cases where the wireless network is used by numerous mobile devices, collisions are difficult to avoid in view of the unpredictability of their occurrence and random use of wireless medium, as it is not known when and in which location a new mobile station may use the network.

In cases where the wireless network is used in a more predictable manner, especially when high wireless medium utilization is caused by one device, it is possible to detect some constant interferences within the network.

For example, WO2010122488A1 discloses a device and method for detecting channel state wherein the detecting device first monitors a channel within a predetermined duration so as to receive a plurality of signals transmitted on the channel, and then determines whether part of the plurality of signals possess periodicity. If part of the plurality of signals possesses periodicity, then the detecting device determines that the channel is interfered. Even if there is no or less data traffic over one or more wireless networks which occupy the channel, the detecting device and method provided by the present invention are capable of detecting the existence of the one or more wireless networks, and determine that the channel is interfered, so as to avoid potential interference.

Therefore, the prior art solutions known so far dealt with the interferences in the wireless network by detecting the interference and avoiding communication over the interfered channel.

### SUMMARY OF THE INVENTION

The inventors have observed that the wireless networks may be significantly interfered by some unforeseen sources that could be managed to reduce the interference if only known to the user. For example, these can be highly utilized wireless networks not known to the user (e.g. a neighbor's wireless system) or non-network sources such as a broken electric device that emits wireless noise or malfunctioning network devices that occupy too much bandwidth (i.e., to wrong configuration or a channel access implementation that violates the regulatory standard).

Therefore, there is a need to provide an efficient method and system to identify the interferers in the wireless network.

The object of the invention is a method for identifying an interferer in a wireless network, the method comprising: providing at least two scanners configured to receive wireless network signal and to determine an angle of arrival of the signal; providing a controller configured to communicate with the scanners, wherein the controller comprises mapping data indicating the location of the scanners and a user interface; requesting at least one of the scanners to perform a scan of the wireless network channels to detect a channel that is highly utilized by an interfering device not known to the controller; requesting at least two of the scanners to detect the angle of arrival of the signal in the highly utilized channel to the particular scanner; determining a location of a source of the signal in the highly utilized channel based on the mapping data and at least two angles of arrival of the signal to particular scanners; and presenting the location of the source of the signal via the user interface.

A channel that is highly utilized can be a channel that is occupied for a period longer than a predetermined threshold.

A channel that is highly utilized can be the channel that contains data not complaint with a standard data structure of the wireless network standard.

A channel that is highly utilized can be searched among channels that are not used by devices known to the controller.

The mapping data further comprises a plan of a facility wherein the scanners are installed and presenting the location of the source of the signal via the user interface includes presenting the location on the map of the facility.

The invention also relates to a system for determining an interferer in a wireless network, the system comprising a controller and at least two scanners configured to operate according to the method as described herein.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### BRIEF DESCRIPTION OF DRAWINGS

The present invention will be shown by means of example embodiments on a drawing, wherein:

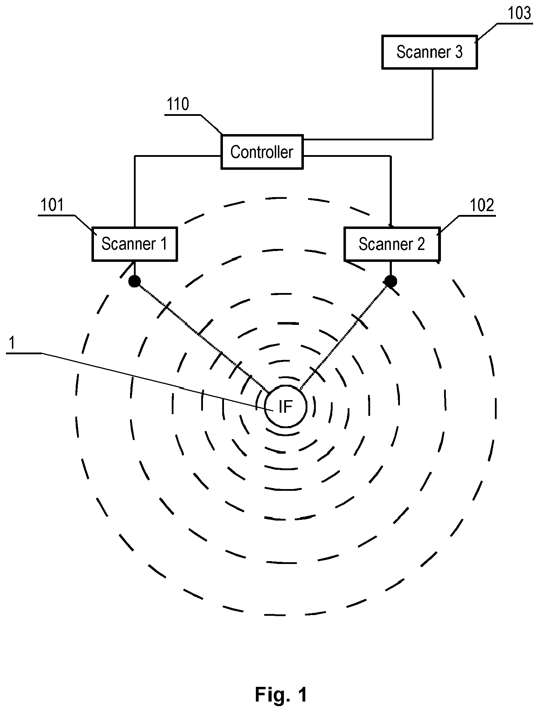

Fig. 1 shows an example of a Wi-Fi ecosystem with an interferer;
Fig. 2 shows a structure of a controller;
Fig. 3 shows a method of operation of the system;
Fig. 4A shows a first example of a user interface presenting interferer location on a plan;
Fig. 4B shows a second example of a user interface presenting interferer location on a plan;
Fig. 4C shows an example of a user interface presenting interferer location with respect to scanners.

### DETAILED DESCRIPTION OF EMBODIMENTS

The present invention relates in general to Wi-Fi networks as defined by the IEEE 802.11 family of standards. It is also applicable to other wireless networks that uses the multiple antennas system capable of angle of arrival detection.

The system for detecting interferers comprises a controller 110 and at least two scanners 101, 102, and 103.

The controller 110 is a device connected to a user interface that controls the system's operation and provides the user with the location of the interferer.

The scanners 101, 102, 103 are wireless communication devices with multiple antennas capable of detecting the direction from which a signal is received. For example, the scanners can be range extenders of a Wi-Fi Mesh network.

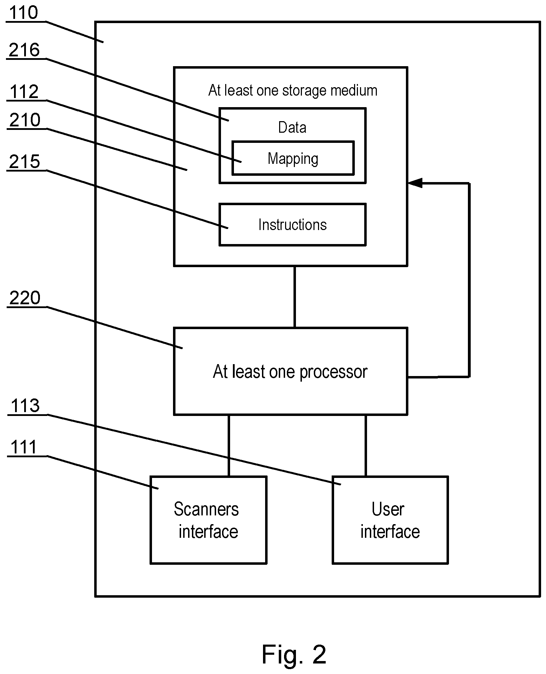

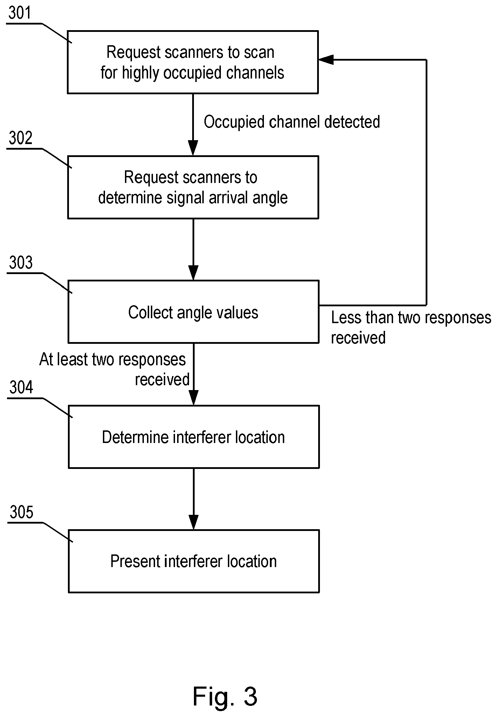

The controller 110 may have a structure as shown in Fig. 2. The controller 110 may be a dedicated device or may share its resources or be implemented as an application in a stationary device at user premises, such as a digital television set-top box, a tv set, a home gateway, a Mesh controller, a central computer, etc. or in a mobile device, such as a user smartphone. The controller 110 includes at least one non-transitory processor-readable storage medium 210 that stores at least one of processor-executable instructions 215 or data 216; and at least one processor 220 communicably coupled to the at least one non-transitory processor-readable storage medium 210. The at least one processor 220 is configured (by executing the instructions 215 and reading the data 216) to perform the steps of the method described with reference to Fig. 3. The controller 110 further comprises a scanners interface 111 to communicate with the scanners 101-103. The controller 110 provides its output to the user via a user interface 113, such as a display or a display connection port. The data 216 stored in the memory 210 comprises mapping data 112 that defines at least a location of the scanners 101-103 and may further comprise data such as a location of the user interface 113 or a map of the user's facility within which the system operates (such as a private house or a business facility).

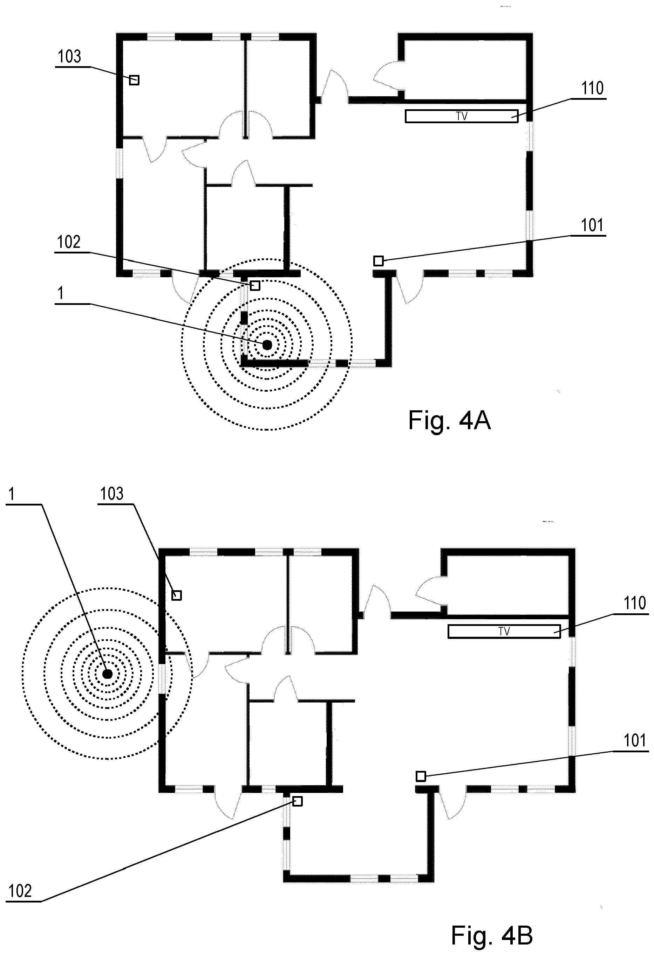

The system operates as explained in reference to Fig. 3. In step 301, the controller requests at least one of the scanners 101-103 to scan wireless channels to detect highly utilized channels. In particular, this step may be limited to channels not occupied by devices known to the controller (which are not considered external interferers). This step may comprise a periodic check of channel occupancy (i. e. measured the channel utilization parameter above a predetermined level) to determine whether the channel is occupied for a period longer than a predetermined threshold, such as 1 second or 1 minute (to detect periodic or continuous interferers). Alternatively, this step may comprise an analysis of data transmitted in the channel to detect whether the data is compliant with the current wireless standard (e.g., contains packets of a structure according to the standard, which may indicate a presence of an external device communicating in a standard manner) or whether the data is not compliant with the wireless standard (e.g., contains unrecognizable data, which may indicate a presence of an external noise source). If a highly occupied channel is detected, then in step 302 the controller requests at least two scanners 101-103 to detect the angle of arrival of the signal in the particular channel to the specific scanner 101-103. The scanners 101-103 that can receive that signal will return the angle values. If at least two responses (i.e., at least two angle values) are received from the scanners 101-103 in step 303, then in step 304, the controller calculates, based on a predetermined position of the scanners (stored in the mapping data 112), using triangulation techniques, the location of the source of the signal in the analyzed channel. In step 305, the location of the source of the signal is presented to the user via the user interface 113. In case the mapping data comprises a map of the facility within which the system operates and the scanners 101-103 are located within the map, it is possible to present the user with a map and the location of the signal source on the map, as shown e.g. in Fig. 4A (which shows a home plan). If the mapping data does not comprise a map of the facility but only a location of the scanners 101-103 with respect to each other, the user may be presented with a location of the source relative to the scanners, as shown e.g. in Fig. 4B.

In the example shown in Fig. 4A, the system is installed at home, wherein the controller 110 is implemented in a digital television receiver connected to a TV set located in a living room. Three Wi-Fi Mesh range extenders installed at home are used as scanners: the first scanner 101 installed in the living room, the second scanner 102 installed in the kitchen and the third scanner 103 installed in the bedroom. In the presented example, the system may detect an interferer 1 in the form of a malfunctioning microwave oven that periodically disrupts one or more wireless channels by detecting the noise from that interferer by the scanners 101 and 102 (wherein scanner 103 may be located too far away to detect the noise). The user interface can therefore conveniently display a home plan with the location of the interferer 1, therefore the user may easily locate the interferer, determine the interference nature and take actions to eliminate the noise source.

In the example shown in Fig. 4B, the system is installed also at home at a similar configuration as shown in Fig. 4A, wherein the interferer 1 signal may be well received by the third scanner 103 and weakly by the first scanner 101 and the second scanner 102. In the presented example, the system may detect an interferer 1 in a form of a Wi-Fi transmitting device, that is unknown to the home wireless environment (in particular, that is not known to the controller 110, wherein the controller 110 may store a list of known devices, i.e. devices whose signals are not considered as interfering signals) and causes abnormally high medium utilization (e.g. transmitter with TDMA medium access method) causing our system being unable to access the wireless channel. The user interface can conveniently display a home plan with a predicted location of the interferer 1 as the direction from which the interferer signal is received, therefore the user may determine which neighbor's transmitter causes problems at the user's network.

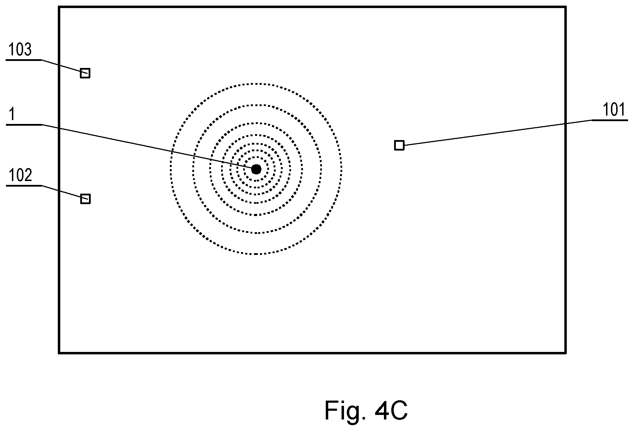

In the example shown in Fig. 4C, the system is installed in a facility of unknown plan but of known location of the scanners 101, 102, 103. In that case, the user interface may simply display the relative location of the noise source with respect to the scanners 101, 102, 103. Knowing the position of the scanners within the facility, the user may then locate the interferer, determine the interference nature and take actions to eliminate the noise source.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only and are not exhaustive of the scope of the technical concept presented herein.

Accordingly, the scope of protection is not limited to the preferred embodiments described in the specification but is only limited by the claims that follow.

## Claims

1. A method for identifying an interferer in a wireless network, the method comprising:
- providing at least two scanners (101-103) configured to receive wireless network signal and to determine an angle of arrival of the signal;
- providing a controller (110) configured to communicate with the scanners (101-103), wherein the controller (110) comprises mapping data (112) indicating the location of the scanners (101-103) and a user interface (113);
- requesting (301) at least one of the scanners (101-103) to perform a scan of the wireless network channels to detect a channel that is highly utilized;
- requesting (302) at least two of the scanners (101-103) to detect the angle of arrival of the signal in the highly utilized channel to the particular scanner (101-103);
- determining (303) a location of a source of the signal in the highly utilized channel based on the mapping data (112) and at least two angles of arrival of the signal to particular scanners (101-103); and
- presenting (305) the location of the source of the signal via the user interface (113).

2. The method according to claim 1, wherein a channel that is highly utilized is the channel that is occupied for a period longer than a predetermined threshold.

3. The method according to claim 1, wherein a channel that is highly utilized is the channel that contains data not complaint with a standard data structure of the wireless network standard.

4. The method according to any of previous claims, wherein a channel that is highly utilized is searched among channels that are not used by devices known to the controller (110).

5. The method according to any of previous claims, wherein the mapping data (112) further comprises a plan of a facility wherein the scanners (101-103) are installed and presenting (305) the location of the source of the signal via the user interface (113) includes presenting the location on the map of the facility.

6. A system for determining an interferer in a wireless network, the system comprising a controller (110) and at least two scanners (101-103) configured to operate according to the method of any of previous claims.
